# EUROPEAN PATENT APPLICATION

(11) **EP 3 499 073 A1**
(43) Date of publication of application: **19.06.2019**
(21) Application number: 17207582.2
(22) Date of filing: 15.12.2017
(51) Int. Cl.: F16D 65/095

(54) **BRAKE CALIPER**

(71) Applicant: Meritor Heavy Vehicle Braking Systems (UK) Limited, Cwmbran, Gwent NP44 3XU (GB)
(72) Inventor: HOWARD, Alex, Cwmbran, Gwent NP44 3XU (GB); MCGINN, Matt, Cwmbran, Gwent NP44 3XU (GB)
(74) Representative: Jones, John Bryn

(57) **Abstract**

A brake caliper having:
a first portion defining a housing adapted to receive an actuating mechanism,
a second portion spaced from the first portion thereby defining a plane of rotation of a brake rotor,
the second portion defining a first side facing the first portion and a second side facing away from the first portion,
a first bridge connecting the first portion to the second portion, and
a second bridge spaced from the first bridge and connecting the first portion to the second portion,
the first portion, second portion, first bridge and second bridge being cast as a single casting,
the second portion having a hole extending through the second portion from the first side to the second side, the hole defining a wall of the hole,
the caliper further including a brake pad having a brake pad backplate, the brake pad backplate having a projection received in the hole, the projection having a rim, at least a portion of the rim engaging a portion of the wall to react circumferential and/or radial forces between the brake pad and caliper in use.

## Description

The present invention relates to a brake caliper and a method of manufacturing a brake caliper.

According to an aspect of the present invention there is provided a brake caliper having:
a first portion defining a housing adapted to receive an actuating mechanism,
a second portion spaced from the first portion thereby defining a plane of rotation of a brake rotor,
the second portion defining a first side facing the first portion and a second side facing away from the first portion,
a first bridge connecting the first portion to the second portion, and
a second bridge spaced from the first bridge and connecting the first portion to the second portion,
the first portion, second portion, first bridge and second bridge being cast as a single casting,
the second portion having a hole extending through the second portion from the first side to the second side, the hole defining a wall of the hole,
the caliper further including a brake pad having a brake pad backplate, the brake pad backplate having a projection received in the hole, the projection having a rim, at least a portion of the rim engaging a portion of the wall to react circumferential and/or radial forces between the brake pad and caliper in use.

The brake caliper may define a circumferential direction and radial direction.

The hole may define a circumferential dimension and a radial dimension, the circumferential dimension may be larger than the radial dimension.

The circumferential dimension may define a first and second circumferential end of the hole, the first and/or the second circumferential end may be curved.

The radial dimension may define first and second radial ends of the hole, the first and/or the second radial end may include a straight portion.

The first side of the second portion may include a flat portion surrounding the hole and the brake pad backplate may engage the flat portion in use.

The flat portion may be parallel to the plane of rotation of a brake rotor.

The wall may be a first wall, the hole may be a first hole the projection may be a first projection, and the rim may be a first rim, the second portion may have a second hole extending through the second portion from the first side to the second side, the second hole may define a second wall of the second hole,
the brake pad backplate may have a second projection received in the second hole,
the second projection may have a second rim, at least a portion of the second rim engaging a portion of the second wall to react circumferential and/or radial forces between the brake pad and caliper in use.

The first hole may be circumferentially spaced apart from the second hole by a land, the brake caliper including a retention device for securing the brake pad in the caliper in use, a portion of the retention device being attached via a fixing device to the land.

The fixing device may be fixed in a hole, preferably a threaded hole in the land.

According to a further aspect of the present invention there is provided a method of manufacturing a brake caliper including the steps of:
a) casting a brake caliper to provide a bare casting having a first portion defining a housing adapted to receive an actuating mechanism,
   a second portion spaced from the first portion thereby defining a plane of rotation of a brake rotor,
   the second portion defining a first side facing the first portion and a second side facing away from the first portion,
   a first bridge connecting the first portion to the second portion, and
   a second bridge spaced from the first bridge and connecting the first portion to the second portion,
b) forming a hole in the second portion, the hole extending through the second portion from the first side to the second side, the hole defining a wall
c) machining a part of the wall from the second side.

The step of forming the hole may be carried out during casting of the bare casting.

The step of machining a part of the wall may include machining a part of the wall proximate the first side.

The invention will now be described, by way of example only, with reference to the accompanying drawings in which:
Figure 1 shows an isometric view of a brake caliper according to the invention,
Figure 2 shows an alternative isometric view of the brake caliper of figure 1,
Figure 3 shows a side view of the brake caliper of figure 1,
Figure 4 shows a cross-section isometric view of the brake caliper of figure 1,
Figure 5 shows a cross-section of the brake caliper of figure 1,
Figure 6 shows a brake pad for use in the brake caliper of figure 1 or figure 7,
Figure 7 shows an isometric view of a further embodiment of the brake caliper according to the present invention,
Figure 8 shows an isometric cross-section view of the brake caliper of figure 6,
Figure 9 shows a side view of part of the brake caliper of figure 7,
Figure 10 shows an isometric view of a component for use with the brake calipers of figures 1 and 7,
Figure 11 shows an isometric view of an alternative component for use with the brake calipers of figures 1 and 7, and
Figure 12 shows part of the component of figure 11.

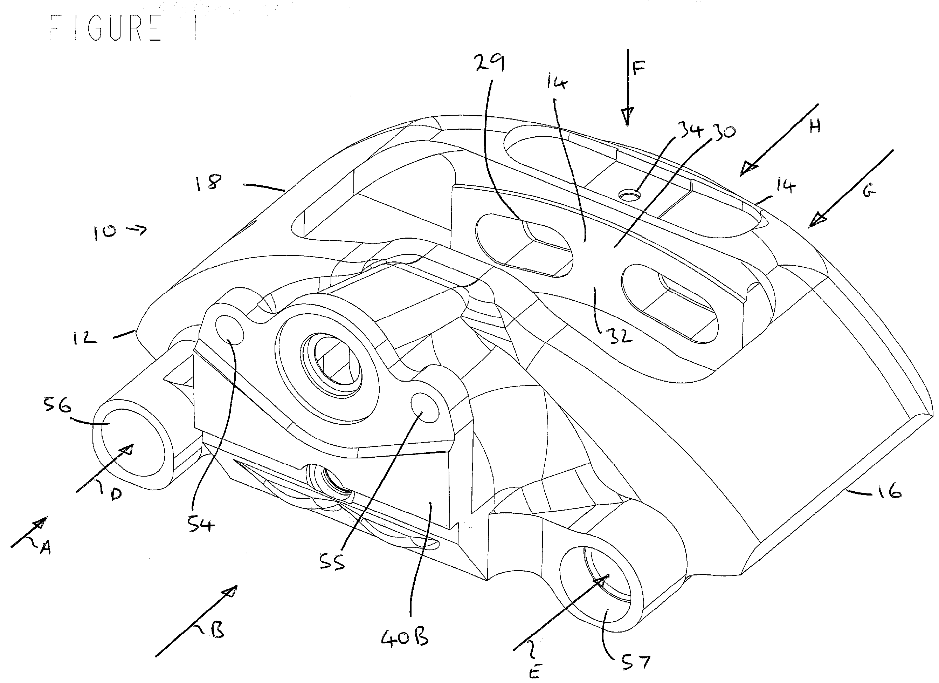

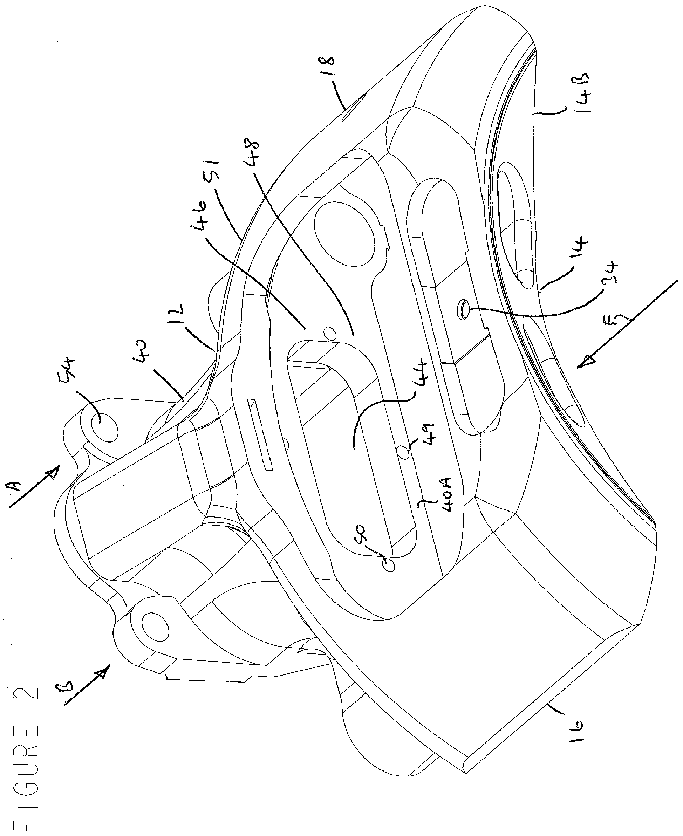

With reference to figures 1 to 6 there is shown a brake caliper 10 having a first portion 12 defining a housing 40 and a second portion 14. The second portion is spaced from the first portion thereby defining a plane P of rotation of a brake rotor 20.

The first portion 12 is connected to the second portion 14 by a first bridge 16 and a second bridge 18. The first bridge 16 is spaced apart from the second bridge 18.

The second portion defines a first side 14A which faces the first portion 12 and a second side 14B which faces away from the first portion 12.

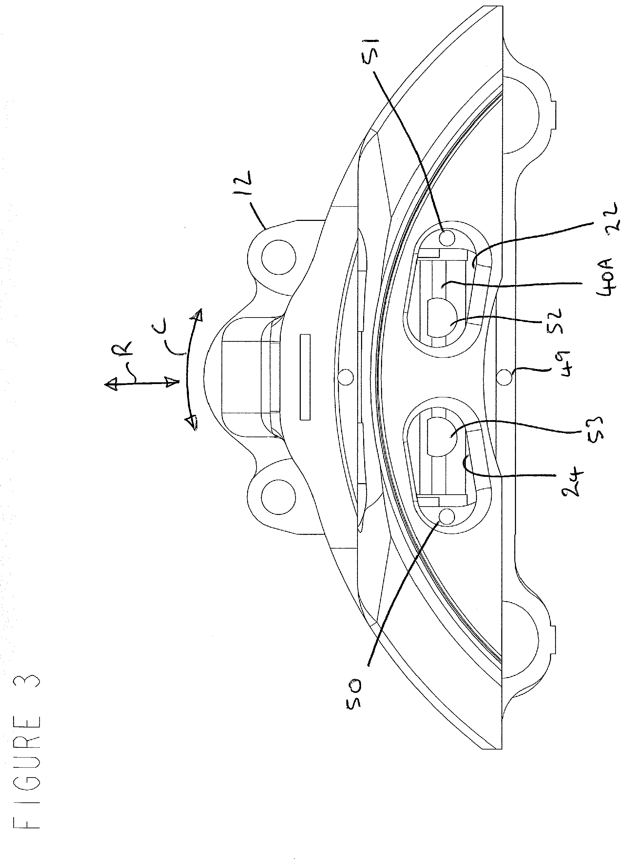

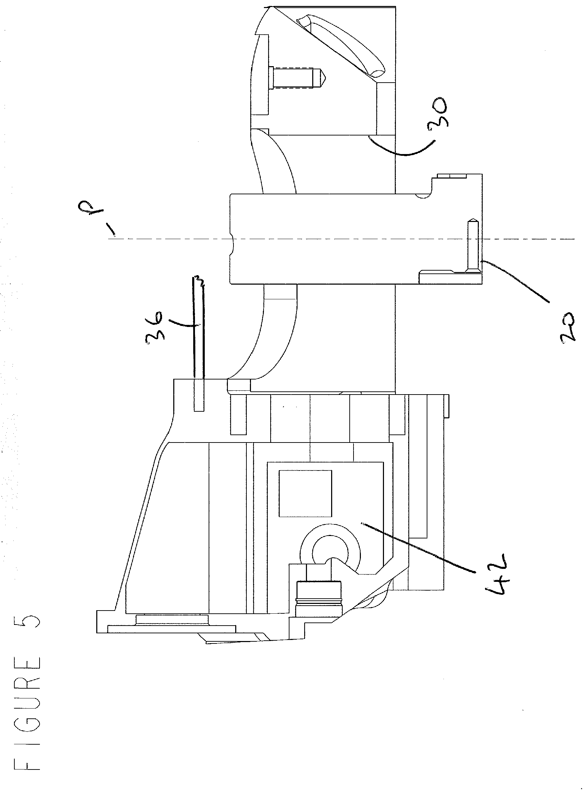

The second portion has a first hole 22 extending through the second portion from the first side 14A to the second side 14B. The first hole 22 defines a wall 22A of the first hole. The second portion 14 also includes a second hole 24 extending through the second portion from the first side to the second side, the second hole defining a wall 24A of the second hole. As will be appreciated the first hole and second hole are both through holes as can be seen from figures 1, 3 and 4. The wall of the first hole therefore is a continuous wall defining the first hole. Similarly, the wall of the second hole is a continuous wall defining the second hole. Brake caliper 10 defines a radial direction R (see figure 3) and a circumferential direction C. As can be seen from figure 3 the circumferential extent of the first hole 22 is larger than the radial extent of the first hole. The circumferential ends 26 and 27 of the first hole are curved. The radial edges 28, 29 of the first hole include straight portions. Similarly, the circumferential ends of the second hole 24 are curved and the radial edges of the second hole 24 include straight portions. The second portion 14 includes a flat portion 30 which surrounds the first hole 22 and the second hole 24. In use, the brake pad backplate engages the flat portion 30 (as will be further described below). As can be seen from figure 5, the flat portion 30 is parallel to the plane P rotation of the brake rotor 20. The first hole 22 is spaced apart from the second hole 24 by a land 32. Machined into the land 32 is a fixing hole 34, in this case a threaded hole. The threaded hole is used to secure a brake pad retaining strap 36 as will be further described below. As regards the first portion 12, this defines the housing 40 which is adapted to receive an actuator mechanism 42 (see figure 5). The housing has a first housing side 40A facing the second portion 14. The housing has a second housing side 40B facing away from the second portion 14. The first housing side 40A defines a recess 44 for receiving the actuating mechanism 42. The recess defines a recess opening 46 having a rim 48. The rim 48 includes threaded holes 49, 50 and 51. The recess 44 includes machined pockets 52 and 53. The brake caliper 10 is manufactured as follows:-

A mould (not shown) is provided in order to cast the brake caliper. The mould produces a bare casting (i.e. a casting that has not, at this stage, had any machining operations carried out on it). The bare casting includes the first portion, the second portion, the first bridge and the second bridge. Thus, the first portion, the second portion, the first bridge and the second bridge are cast as a single casting.

The mould includes casting cores which define the first hole 22 and the second hole 24 in the bare casting.

Various surfaces of the bare casting are machined. Thus, hole 54 in the first portion 12 is drilled by arranging a drill bit to approach the bare casting in the direction of arrow A in order to machine the casting and hence form the hole 54. Similarly hole 55 can be machined by the drill approaching the casting in the direction of arrow B in order to machine the casting. Hole 56 can be machined by a machine tool approaching the casting in the direction of arrow D. Hole 57 can be machined by a machine tool approaching the casting in the direction of arrow E. Threaded hole 34 can be drilled to a tapping size by a drill approaching the casting in the direction of arrow F and can then be tapped to the correct thread by a tap approaching the hole in the direction of arrow F. As will be appreciated, when machining holes 34, 54, 55, 56 and 57 there is no part of the caliper which obstructs the approach and withdrawal of the machining tool.

In prior art calipers machining certain features within and adjacent a housing which receives an actuating mechanism is complicated since the features are obscured by an outer portion of the brake.

However, in the present application and as best seen in figure 3, the machining of threaded holes 50 and 51 and the machining of pockets 52 and 53 is not obscured by the second portion 14 because the second portion 14 includes the first hole 22 and second hole 24 through which the machining tool can pass. Thus, in order to form threaded hole 50, the hole can first be drilled to a tapping size by a drill bit approaching the hole in the direction of arrow G, the drill bit initially passing through second hole 24 as it approaches rim 48 in order to drill the tapping hole. Once the tapping hole has been drilled the drill can be withdrawn back through the second hole. The tap can then approach the hole 50 in the direction of arrow G passing through the second hole 24 as it approaches and taps threaded hole 50. The tap can then be withdrawn from hole 50 and then further withdrawn backwards through the second hole 24.

Threaded hole 51 can similarly be drilled and tapped via tools passing through the first hole 22.

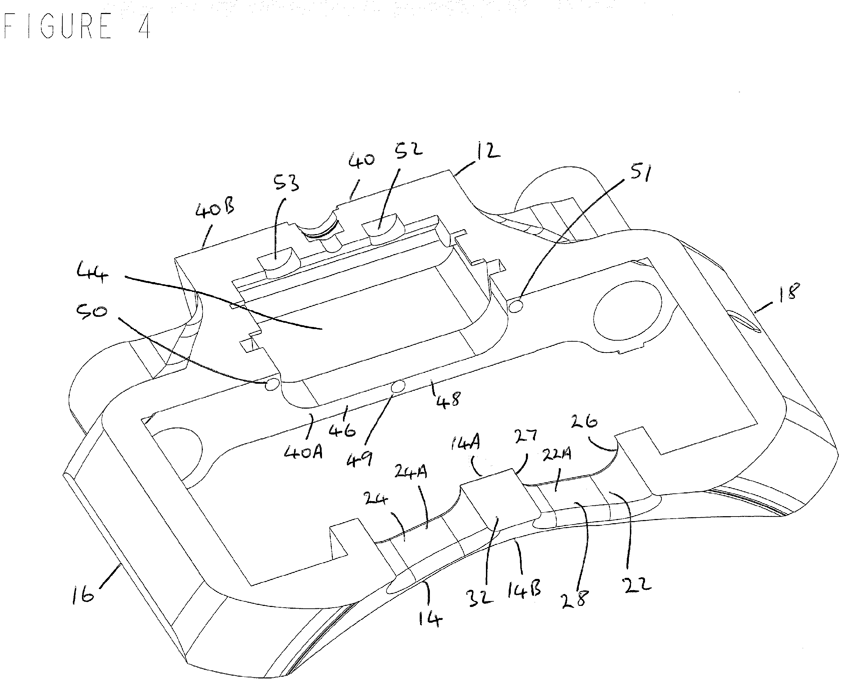

As far pocket 53 is concerned, as best seen from figure 4, this can be machined using an end milling cutter with the cutter passing through the second hole in the direction of arrow H in order to mill the pocket and then being withdrawn back through the second hole 24 once milling of the pocket has been completed.

Similarly, a milling cutter can be used to machine pocket 52 by arranging the milling cutter to pass through first hole 22 immediately prior to machining and then being withdrawn back through the first hole after machining.

Considering figure 3, the thread in threaded hole 50 will have an outer diameter. This outer diameter defines an axially projected area, i.e. when viewing figure 3, which is a view taken along the axis of the brake rotor, the threaded hole 50 defines an area of circular shape. In particular, all of this area can be seen through the second hole 24, in other words all of the machined parts of threaded hole 50 when projected in an axial direction are encompassed by the second hole 24. As will be appreciated, the cross-section area of the second hole 24 when viewed in an axial direction is at least as big as the cross section area of the threaded hole 50. In the present case the cross section area of second hole 24 is larger than the cross-section area of the threaded hole 50.

Similarly, the cross-section area of threaded hole 51 when viewed in the direction of figure 3, i.e. when viewed in the axial direction of the brake rotor is entirely encompassed by the first hole 22.

As best seen in figure 3, the machined pocket 53 has a generally U-shaped shape when viewing figure 3, the U-shape defining a axially projected area of the pocket 53. It will be appreciated that this axially projected area is entirely encompassed by cross-section of the second hole 24.

Similarly, pocket 52 has a generally U-shaped cross-section shape defining an axially projected area which axially projected area is entirely encompassed by the cross-section of the first hole 22.

As described above, first side 14A of the second portion has a flat portion 30. This can be machined by a milling cutter attached to a tool positioned in either above the caliper when viewing figure 1 or positioned below the caliper when viewing figure 1.

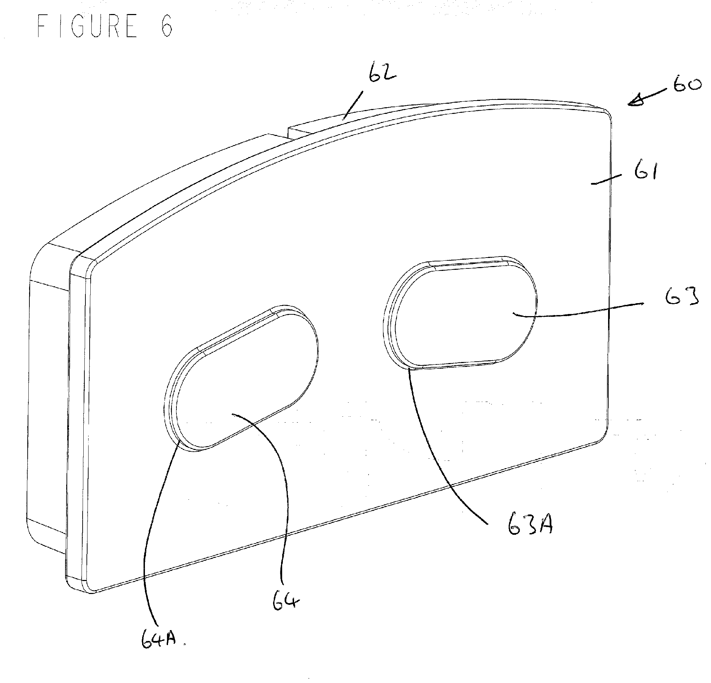

Figure 6 shows a brake pad 60 having a brake pad backplate 61 and friction material 62. The brake pad backplate includes first projection 63 and second projection 64. When assembled into the brake caliper 10 the first projection 63 is received in the first hole 22 and the second projection 64 is received in the second hole 24. The first projection 63 includes a rim 63A and the second projection 64 includes a rim 64A. A part of the rim 63A engages part of the wall 22A of the first hole and a part of the rim 64A engages a part of the wall 24A of the second hole. As will be appreciated from figure 5, because rims 63A and 64A are received in holes 22 and 24 then this prevents the brake pad 60 moving either up or down in the radial direction R when viewing figure 3 and also prevents the brake pad 60 moving right or left in a circumferential direction C when viewing figure 3. Furthermore, since the first projection 63 is spaced apart from the second projection 64 then the brake pad cannot twist, i.e. the spacing apart of the first and second projections prevents, for example, the first projection moving radially upwards when viewing figure 3 whilst the second projection moves radially downwards when viewing figure 3 (and vice versa).

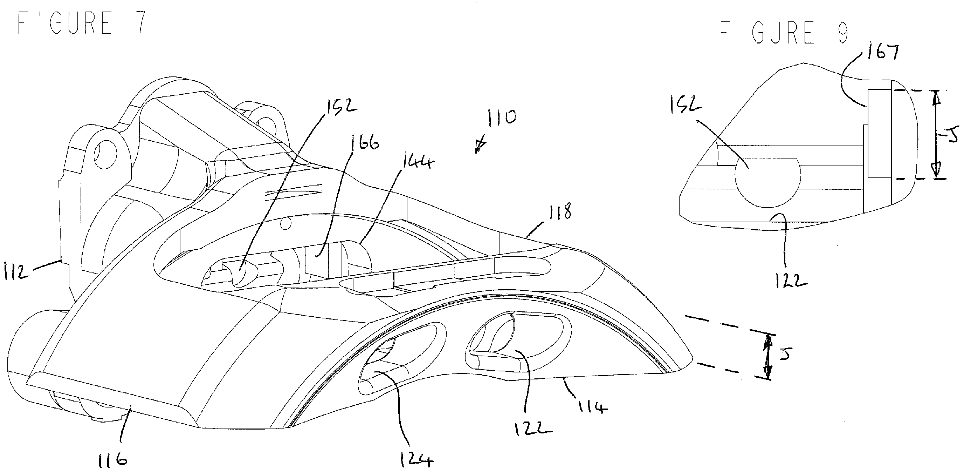

With reference to figures 7 to 9 there is shown a second embodiment of a brake caliper 110 according to the present invention wherein features which perform substantially the same function as those of brake caliper 10 are labelled 100 greater. As will be appreciated, machined pocket 152 is machined in a similar manner to pocket 152, i.e. machined pocket 152 is machined by the tool passing through the first hole 22 as it approaches the pocket and the tool being withdrawn through the first hole 122 once the machining of pocket 152 has been completed (see especially figure 9).

In this case the recess 144 includes a machined surface 166, in this case a flat machined surface. As best seen from figures 7 and 9, the machined surface has an overall height J. The machined surface is parallel to the axis of rotation of the brake rotor, in other words it is perpendicular to the plane of rotation of the brake rotor. This machined surface can be machined using a milling cutter which can be moved into position by passing it through the first hole 122 prior to machining and once the machined surface 166 has been completed the milling cutter can be withdrawn back through the first hole 122. As will be appreciated from figure 9, the machined surface 166 defines an axially projected line 167 having height J and as best seen in figure 9, all of the axially projected line 167 is encompassed by the hole 122.

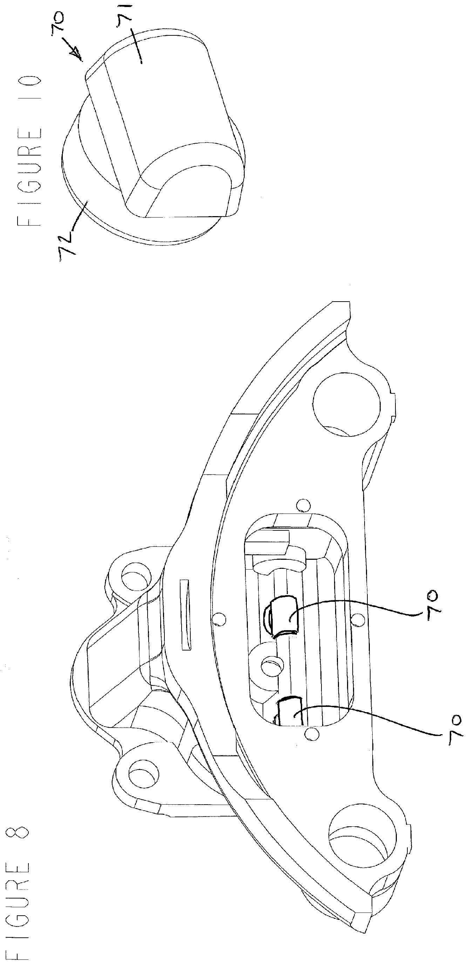

Figure 10 shows a bearing 70 having a part cylindrical bearing surface 71 integrally formed with a circular boss 72. The circular boss 72 has a diameter which is similar to the diameter of the machined pocket 152. As can be seen from figure 8, once the pocket 152 has been machined, the bearing 70 can be assembled into that pocket, in particular the circular boss 72 can be fitted into pocket 152. This enables the part cylindrical bearing surface 71 to be provided inside the recess 144. As can be seen from figure 8, a further bearing 70 can be fitted in a pocket the equivalent of pocket 53 of caliper 10 to provide a second part cylindrical bearing surface. As will be appreciated, with regard to braking caliper 10, a bearing 70 can be fitted into pocket 52 to provide the bearing surface and a further bearing 70 can be fitted into pocket 53 to provide further bearing surface.

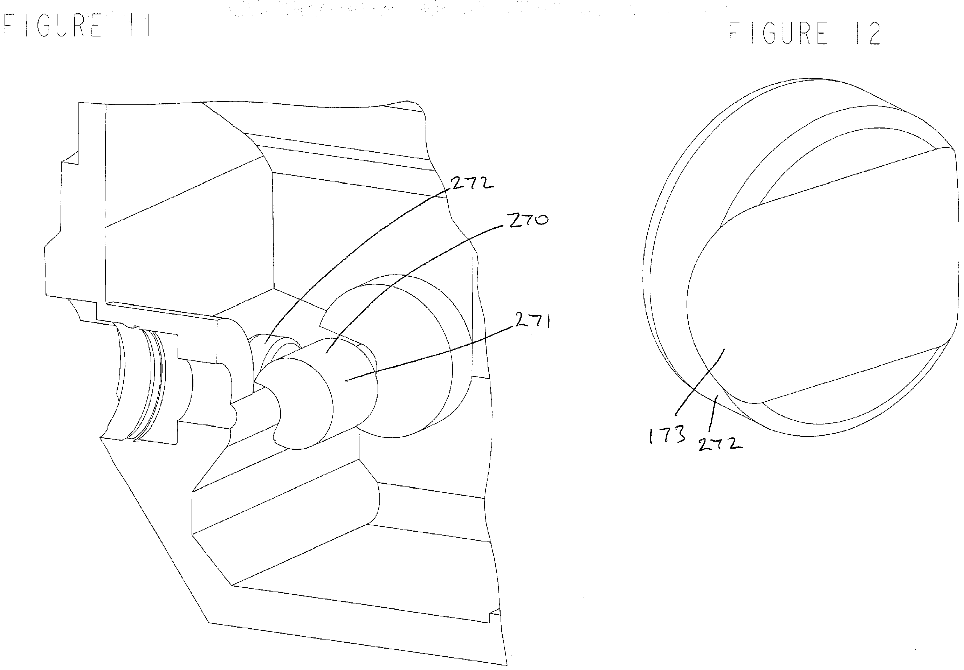

The cylindrical bearing surface 71 and the circular boss 72 of bearing 70 are integrally formed. Figures 11 and 12 show a bearing 270 wherein a circular boss 272 is formed separately from a cylindrical bearing surface 271. The circular boss 272 includes a concave recess 273 to receive the cylindrical bearing surface 271.

## Claims

1. A brake caliper having:
a first portion defining a housing adapted to receive an actuating mechanism,
a second portion spaced from the first portion thereby defining a plane of rotation of a brake rotor,
the second portion defining a first side facing the first portion and a second side facing away from the first portion,
a first bridge connecting the first portion to the second portion, and
a second bridge spaced from the first bridge and connecting the first portion to the second portion,
the first portion, second portion, first bridge and second bridge being cast as a single casting,
the second portion having a hole extending through the second portion from the first side to the second side, the hole defining a wall of the hole,
the caliper further including a brake pad having a brake pad backplate, the brake pad backplate having a projection received in the hole, the projection having a rim, at least a portion of the rim engaging a portion of the wall to react circumferential and/or radial forces between the brake pad and caliper in use.

2. A brake caliper as defined in claim 1 wherein the brake caliper defines a circumferential direction and radial direction.

3. A brake caliper as defined in claim 2 wherein the hole defines a circumferential dimension and a radial dimension, the circumferential dimension being larger than the radial dimension.

4. A brake caliper as defined in claim 2 or 3 wherein the circumferential dimension defines a first and second circumferential end of the hole, the first and/or the second circumferential end being curved.

5. A brake caliper as defined in any one of claims 2 to 4 wherein the radial dimension defines first and second radial ends of the hole, the first and/or the second radial end including a straight portion.

6. A brake caliper as defined in any preceding claim in which the first side of the second portion includes a flat portion surrounding the hole and the brake pad backplate engages the flat portion in use.

7. A brake caliper as defined in claim 6 wherein the flat portion is parallel to the plane of rotation of a brake rotor.

8. A brake caliper as defined in any preceding claim wherein the wall is a first wall, the hole is a first hole the projection is a first projection, and the rim is a first rim, the second portion having a second hole extending through the second portion from the first side to the second side, the second hole defining a second wall of the second hole,
the brake pad backplate having a second projection received in the second hole,
the second projection having a second rim, at least a portion of the second rim engaging a portion of the second wall to react circumferential and/or radial forces between the brake pad and caliper in use.

9. A brake caliper as defined in claim 8 wherein the first hole is circumferentially spaced apart from the second hole by a land, the brake caliper including a retention device for securing the brake pad in the caliper in use, a portion of the retention device being attached via a fixing device to the land.

10. A brake caliper as defined in claim 9 wherein the fixing device is fixed in a hole, preferably a threaded hole in the land.

11. A method of manufacturing a brake caliper including the steps of:
a) casting a brake caliper to provide a bare casting having a first portion defining a housing adapted to receive an actuating mechanism,
a second portion spaced from the first portion thereby defining a plane of rotation of a brake rotor,
the second portion defining a first side facing the first portion and a second side facing away from the first portion,
a first bridge connecting the first portion to the second portion, and
a second bridge spaced from the first bridge and connecting the first portion to the second portion,
b) forming a hole in the second portion, the hole extending through the second portion from the first side to the second side, the hole defining a wall
c) machining a part of the wall from the second side.

12. A method of manufacturing a brake caliper as defined in claim 11 wherein the step of forming the hole is carried out during casting of the bare casting.

13. A method of manufacturing a brake caliper as defined in claim 11 or 12 wherein the step of machining a part of the wall includes machining a part of the wall proximate the first side.
